# EUROPEAN PATENT SPECIFICATION

(11) **EP 1 798 690 B1**
(45) Date of publication and mention of the grant of the patent: **14.05.2014**
(21) Application number: 06126036.0
(22) Date of filing: 13.12.2006
(51) Int. Cl.: G06T 11/60

(54) **Method for displaying background image in mobile communication terminal**
Verfahren zum Anzeigen von Hintergrundbildern in Mobilkommunikationsendgeräten
Procédé d'affichage d'une image d'arrière-plan dans un terminal de communication mobile

(30) Priority: 13.12.2005 KR 20050122696
(43) Date of publication of application: 20.06.2007
(73) Proprietor: Samsung Electronics Co., Ltd., Suwon-si, Gyeonggi-do, 443-742 (KR)
(72) Inventor: Lim, Dok-Shin, Gyeonggi-do (KR); Hwang, Byeong-Cheol, Gyeonggi-do (KR); Ahn, Yu-Mi, Gyeonggi-do (KR)
(74) Representative: Grünecker, Kinkeldey, Stockmair & Schwanhäusser

(56) References cited:
- US-A1- 2004 088 656
- US-A1- 2004 207 722
- US-A1- 2005 143 124
- US-A1- 2005 237 413

## Description

The present invention relates generally to a mobile communication terminal, and in particular, to a method for displaying a background image in a mobile communication terminal.

Given the everyday use of a mobile communication terminal, the mobile communication terminal is being developed with various additional functions, together with diversification of its external structure. The various additional functions of the mobile communication terminal include a camera function, a camcorder function, and a digital multimedia broadcast receiving function. The mobile communication terminal depending on the external structure can be exemplified as a folder type mobile communication terminal, a flip type mobile communication terminal, a slide type mobile communication terminal, and a swing type mobile communication terminal. The additional function and the external structure of the mobile communication terminal are developed in association. For example, in digital multimedia broadcasting, a display screen whose horizontal side is longer than a vertical side in percentage can display a natural image and thus, in order to enlarge a display region, the mobile communication terminal has been developed in structure so that an (LCD) liquid crystal display mounted unit can rotate about another unit. The display screen performs vertical display or horizontal display depending on a structural state or a set operation mode of the mobile communication terminal. For example, in the swing type mobile communication terminal whose LCD mounted unit is in a normal state or in a 180° rotated state, a vertical display screen with a horizontal side shorter than a vertical side is set. In the swing type mobile communication terminal whose LCD mounted unit is in a 90° or 270° rotated state, a horizontal display screen with a vertical side longer than a horizontal side is set. Thus, a background image displayed on the display screen in idle mode is also displayed in the vertical or horizontal direction depending on a display state of the display screen.

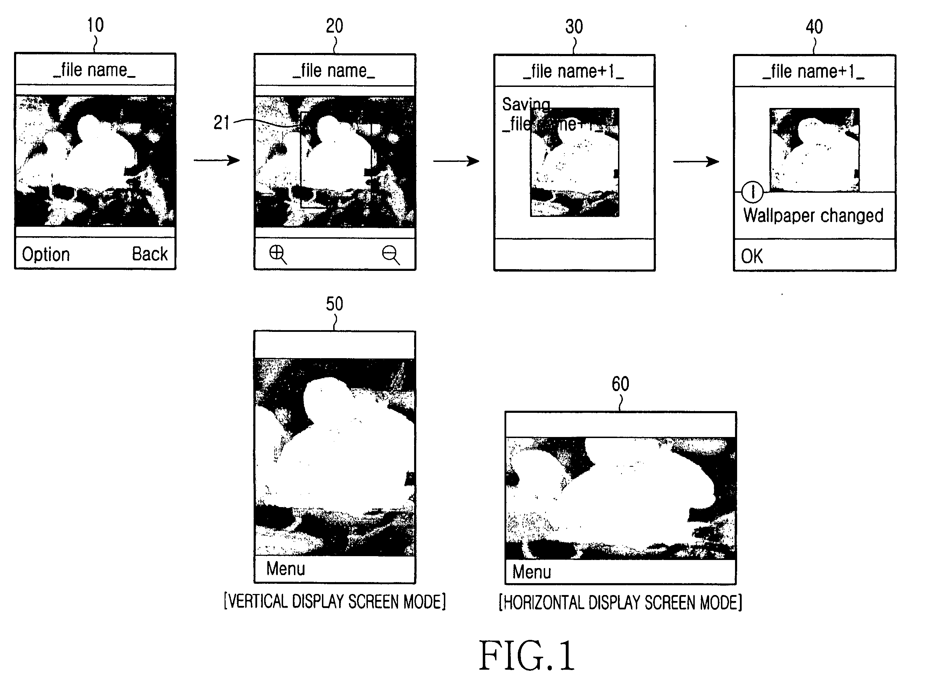

However, a ratio of a horizontal side to a vertical side of the background image is determined on the basis of a vertical display screen mode. A process of setting the background image will be described with reference to FIG. 1. FIG. 1 shows a conventional background image setting process and background image display state. Referring to FIG. 1, a mobile communication terminal displays a predetermined one of a plurality of previously stored images as shown on a first screen 10. In such a state, upon the receipt of a request for setting the background image and a request for setting a selected partial one of the predetermined image as the background image from user, the mobile communication terminal displays a selection frame on the predetermined image as shown on a second screen 20. The user positions the selection frame at a desired position by key manipulation, and presses a selection completion key. If so, the mobile communication terminal displays only a region selected by the selection frame as shown on a third screen 30. The user inputting a completion of background image setting, the mobile communication terminal sets the displayed partial region of the predetermined image as the background image, and displays a message of representing the setting as shown on a fourth screen 40.

Thereafter, in the mobile communication terminal where the vertical display screen is set depending on a current structural state or operation mode, the background image is displayed as shown on a fifth screen 50. However, in the mobile communication terminal where the horizontal display screen is set depending on the current structural state or operation mode, there occurs a drawback that the background image is stretched in the horizontal direction and displayed as shown on a sixth screen 60.

US 2004/088656 A1 relates to using an image as a wallpaper of a mobile terminal. A catalogue of image data sets stored in an image database is displayed on a terminal and one of the image data sets to be used as the wallpaper is selected. A model and a destination address of the mobile terminal to which a processed image data set is sent are input, and an image represented by the selected image data set is displayed on the terminal. An image area is displayed in the image, according to the model of the mobile terminal. A user of the terminal moves, reduces, or enlarges the image area for specifying an area in the image. The selected image data set is processed according to the specified area, and the processed image data set generated in this manner is sent to the destination address.

It is, therefore, the object of the present invention to provide a mobile communication terminal and background image displaying method for displaying a normal background image irrespective of a display direction of a display screen in the mobile communication terminal.

This object is solved by the subject matter of the independent claims. Preferred embodiments are defined in the dependent claims.

It is an aspect of the present invention to provide a background image displaying method for displaying a normal background image whether in a horizontal display screen mode set to a mobile communication terminal.

There is provided a method for displaying a background image in a mobile communication terminal. The method includes storing a predetermined image as background image depending on user's selection, storing position information of vertical screen frame and horizontal screen frame on the background image, and setting the background image; displaying an image of a region associated with the vertical screen frame among the background image, as background image, in response to a request for displaying a display screen of the mobile communication terminal in vertical direction; and displaying an image of a region associated with the horizontal screen frame among the background image, as background image, in response to a request for displaying the display screen of the mobile communication terminal in horizontal direction.

The present invention will become more apparent from the following detailed description when taken in conjunction with the accompanying drawings in which:
FIG. 1 illustrates a conventional background image setting process and background image display state;
FIG. 2 is a block diagram illustrating construction of a mobile communication terminal according to the present invention;
FIGs. 3A and 3B are flowcharts illustrating an operation of a mobile communication terminal in setting background image according to the present invention;
FIG. 4 illustrates a background image setting process and a background image display state according to the present invention; and
FIG. 5 is a flowchart illustrating a background image displaying method according to the present invention.

A preferred embodiment of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for conciseness.

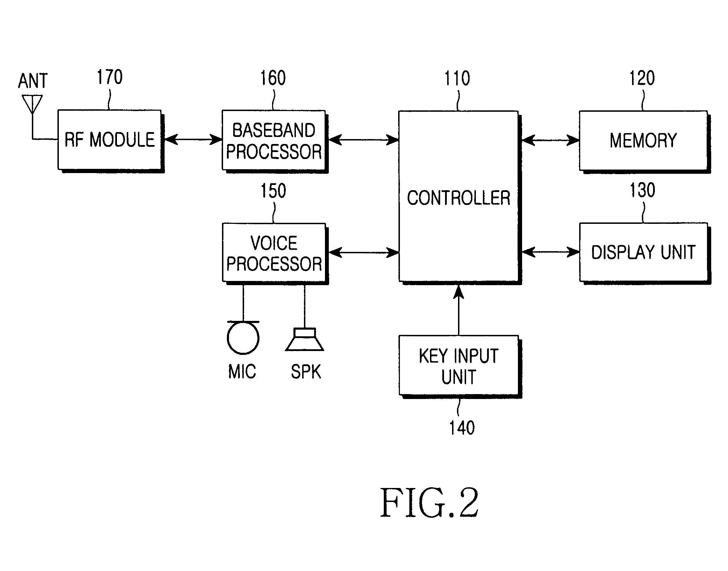

FIG. 2 is a block diagram schematically illustrating construction of a mobile communication terminal according to the present invention. As shown in FIG. 2, the mobile communication terminal includes a controller 110, a memory 120, a display unit 130, a key input unit 140, a baseband processor 160, a radio frequency (RF) module 170, and a voice processor 150.

Referring to Fig 2, the controller 110 controls a general operation of the mobile communication terminal. The display unit 130 displays a variety of image information and an image received from a base station (BS) or stored in the memory 120, on a screen under the control of the controller 110. Under the control of the controller 110, the display unit 130 sets vertical display screen or horizontal display screen. According to the present invention, the vertical display screen refers to a display screen whose horizontal side is shorter than a vertical side in length. The horizontal display screen refers to a display screen whose vertical side corresponds to the horizontal side of the vertical display screen and whose horizontal side corresponds to the vertical side of the vertical display screen such that the horizontal side is longer than the vertical side in length. The controller 110 controls the display unit 130 to select and set the horizontal display screen or the vertical display screen depending on a structural operation state or an operation mode of the mobile communication terminal. For example, in the mobile communication terminal such as a swing type mobile communication terminal whose LCD mounted unit, one of constituent units, is rotated with respect to a predetermined axis, the controller 110 selects and sets the display screen depending on whether a rotation angle of the LCD mounted unit belongs to a preset vertical display screen setting range or a preset horizontal display screen setting range. For example; the vertical display screen setting range can be determined based on a rotation angle of 0° to 70° or 110° to 180°, the horizontal display screen setting range can be determined based on a rotation angle of 70° to 110°. In the mobile communication terminal currently set to a specific operation mode such as a digital multimedia broadcasting mode, the controller 110 selects and sets the display screen depending on the specific operation mode.

The key input unit 140 includes character keys such as * and # keys, and a plurality of function keys such as menu key, option key, call key, cancel key, on/off key, volume key, and photo key for various functions of the mobile communication terminal. The key input unit 140 provides key input data based on a key pressed by user, to the controller 110. The key input unit 140 includes alphanumeric keys having each numeral of 0 to 9 and a plurality of Hangeuls or alphabets.

Referring to FIG. 2, the RF module 170 transmits and receives a wireless signal to and from the mobile communication BS through antenna. The RF module 170 receives a signal from the controller 110 through the baseband processor 160, modulates the received signal, and transmits an RF signal through the antenna. The RF module 170 demodulates a wireless signal received through the antenna, and provides the demodulated signal to the controller 110 through the baseband processor 160. The baseband processor 160 processes a baseband signal transmitted and received between the RF module 160 and the controller 110.

The voice processor 150 connected with the controller 110, as well as a microphone (MIC) and a speaker (SPK) connected to the voice processor 23 are used for telephone call and voice record.

The memory 120 stores and provides program for processing and controlling of the controller 110, reference data, and a variety of updateable storage data, to a working memory of the controller 110. The memory 120 stores a plurality of images, and program data depending on a process of setting and displaying the background image. The memory 120 stores the background image set according to user's selection.

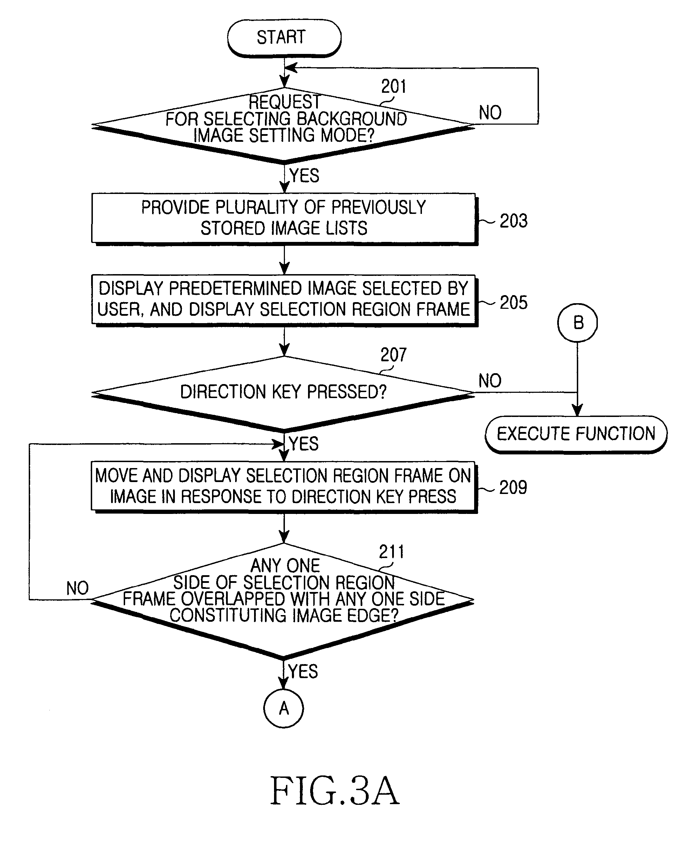

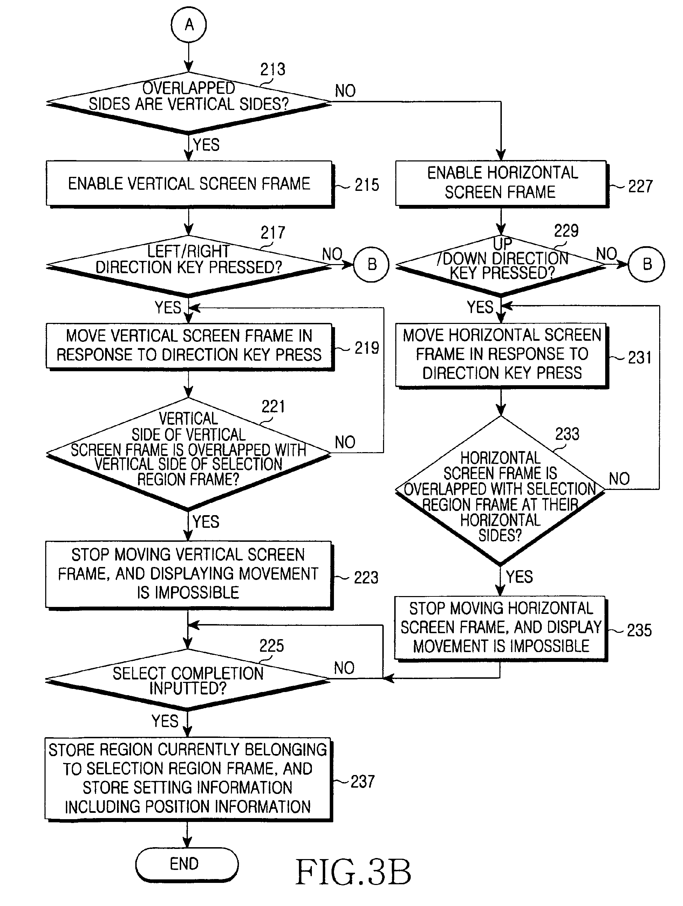

A process of setting the background image in the mobile communication terminal according to the present invention will be described with reference to FIGs. 3A and 3B. FIGs. 3A and 3B are flowcharts illustrating an operation of the mobile communication terminal in setting the background image according to the present invention.

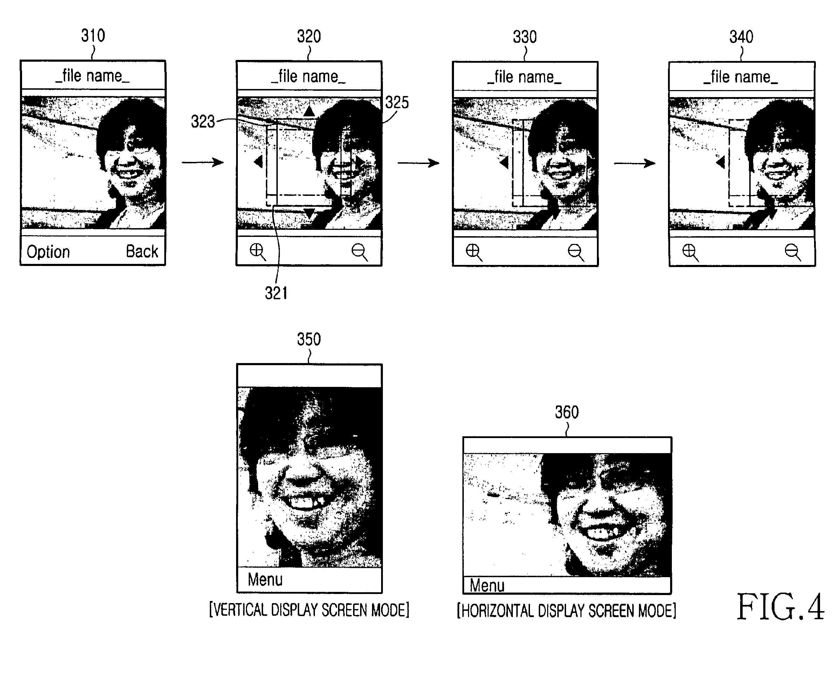

Referring to FIG. 3A, upon reception of a request for selecting and setting the background image in Step 201, the controller 110 proceeds with Step 203. In the Step 203, the controller 110 provides a plurality of previously stored image lists, and proceeds with Step 205. The user checks the plurality of images by key manipulation, and selects one of the images. The user selects an option menu to set a partial region of the selected image as the background image. Thus, in Step 205, the controller 110 displays a predetermined image selected by the user, displays a selection region frame on the predetermined image, and displays a movement direction of the selection region frame using arrow as shown in FIG. 4.

FIG. 4 illustrates a background image setting process and a background image display state according to the present invention. Referring to FIG. 4, a predetermined image is displayed as shown on an eleventh screen 310, and in such a state, when the user selects the option menu to set the partial region of the predetermined image as the background image, in the Step 205, the controller 110 displays the selection region frame 321 on the predetermined image as shown on a twelfth screen 320. The selection region frame refers to a frame for, displaying when the partial region, not all, of the predetermined image is set as a final background image, the region of the predetermined image to be set as the background image according to the present invention. Simply, the image of the region belonging to the selection region frame 321 among the whole image is displayed as the background image in idle mode. In the present invention, the selection region frame 321 includes a vertical screen frame 323 and a horizontal screen frame 325. The vertical screen frame 323 refers to a frame indicating the region that is substantially displayed on the display screen as the background image, among the region selected by the selection region frame 321, in vertical display screen mode. In the vertical display screen mode, the vertical screen frame 323 has the same vertical side to horizontal side ratio as a vertical side to horizontal side ratio of the display screen, and possibly has the greatest size within the selection region frame 321. The horizontal screen frame 325 refers to a frame indicating the region that is substantially displayed on the display screen as the background image, among the region selected by the selection region frame 321, in horizontal display screen mode. In the horizontal display screen mode, the horizontal screen frame 325 has the same vertical side to horizontal side ratio as the vertical side to horizontal side ratio of the display screen, and possibly has the greatest size within the selection region frame 321. The vertical screen frame 323 and the horizontal screen frame 325 are moveable within the selection region frame 321 in response to user's input according to the present invention. In other words, the vertical screen frame 323 is moveable left/right along the horizontal side of the horizontal screen frame 325 within the selection region frame 321, and the horizontal screen frame 325 is moveable up/down along the vertical side of the vertical screen frame 323 within the selection region frame 321. In displaying the selection region frame 321, the arrow indicating the movement direction can be displayed together.

Referring again to FIG. 3A, in state where the predetermined image selected by the user and the selection region frame 321 are displayed as shown on the twelfth screen 320 of FIG.4., in Step 207, the controller 110 checks a direction key of the key input unit 140 pressed by the user, and proceeds with Step 209. In the Step 209, the controller 110 moves and displays the selection region frame 321 on the image in response to the pressing of the direction key , and proceeds with Step 211. In the Step 211, the controller 110 determines whether any one side of the selection region frame 321 is overlapped with any one side constituting an edge of the image. If so, the controller 110 proceeds with a procedure "A", and proceeds with Step 213 of FIG. 3B. In the present invention, the horizontal screen frame 325 and the vertical screen frame 323 are enabled so that, when the selection region frame 321 neither moves in the up/down directions nor the left/right directions on the image, its position can change depending on key pressed by the user. Thus, in the Step 213, the controller 110 determines whether any one side of the selection region frame 321 and any one side constituting the edge of the image overlapped with each other are the vertical sides, respectively. If they are the vertical sides, the controller 110 proceeds with Step 215, otherwise if they are the horizontal sides, the controller 110 proceeds with Step 227. According to the present invention, the controller 110 enables the vertical screen frame 323 in the Step 215, and proceeds with Step 217. At this time, the arrows indicating the movement direction of the selection region frame 321 no longer moving are not displayed, and the arrows indicating the movement direction of the vertical screen frame 323 are displayed around the vertical screen frame 323. For example, when a right vertical side of the selection region frame 321 is overlapped with a right vertical side of the image edge as shown on a thirteenth screen 330 of FIG. 4, the vertical screen frame 323 is enabled. Referring again to FIG. 3, in the Step 217, the controller 110 determines whether the left/right direction key is pressed. If pressed, the controller 110 proceeds with Step 219 and moves the vertical screen frame 325 depending on the direction key pressed, and proceeds with Step 221. When a key to request for moving the selection region frame, not the left/right direction key, is pressed and the direction key is pressed in the Step 217, the controller 110 can move and display the selection region frame 321 depending on the direction key press. The controller 110 checks whether the selection region frame 321 is overlapped with the image edge. If not overlapped, the controller 110 can stop the frame enabling.

In the Step 221, the controller 110 determines whether the vertical side of the vertical screen frame 323 is overlapped with the vertical side of the selection region frame 321. If overlapped, the controller 110 proceeds with Step 223, and otherwise, it proceeds with the Step 219 and repeatedly performs the Steps 219 to 221. In the Step 223, the controller 110 stops moving the vertical screen frame 323, and displays that movement is impossible and proceeds with Step 225. For example the movement impossibility can be expressed by stopping display of the arrow indicating the movement direction as shown on a fourteenth screen 340 of FIG. 4.

Upon determining in the Step 213 of FIG. 3A that any one side of the selection region frame 321 and any one side of the image edge overlapped with each other are in fact the horizontal sides, the controller 110 proceeds with the Step 227 and enables the horizontal screen frame 325. In the Step 229, the controller 110 determines whether the up/down direction key is pressed. If pressed, the controller 110 proceeds with Step 231. When the key to request for moving the selection region frame, not the up/down direction key, is pressed and the direction key is pressed in the Step 229, the controller 110 can move and display the selection region frame 321 depending on the direction key press. The controller 110 checks whether the selection region frame 321 is overlapped with the edge of the image. If no longer overlapped, the controller 110 can stop the frame enabling.

Referring to FIG. 3B, in Step 233, the controller 110 determines whether the horizontal side of the horizontal screen frame 325 is overlapped with the horizontal side of the selection region frame 321. If overlapped, the controller 110 proceeds with Step 235, and otherwise, it repeatedly performs the Steps 231 to 233. In the Step 235, the controller 110 stops moving the horizontal screen frame 325 and displays to express the movement impossibility, and proceeds with the Step 225.

Upon reception of selection completion input from the user in the Step 225, the controller 110 proceeds with Step 237, stores the region currently belonging to the selection region frame 321 as the background image, stores setting information including the position information of the horizontal screen frame 325 and the vertical screen frame 323 within the selection region frame 321, that is, within the background image, and terminates the operation process.

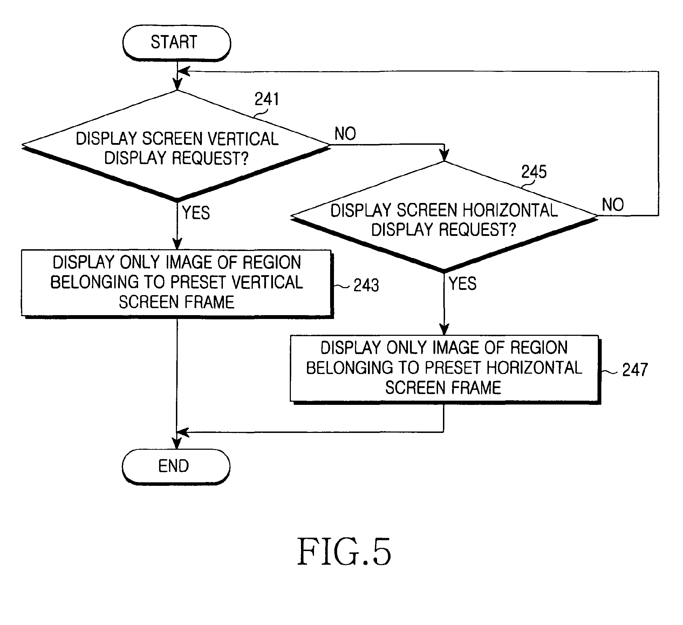

A process of displaying the background image depending on the display direction of the display screen after the above setting of the background image is shown in FIG. 5. FIG. 5 is a flow chart illustrating a background image displaying method according to the present invention. Referring to FIG. 5, in Step 241, the controller 110 checks for a request relating to the display direction of the display screen. If it is a display screen vertical display request, the controller 110 proceeds with Step 243, and otherwise, it proceeds with Step 245. The request relating to the display direction of the display screen can be generated depending on the structural operation state or the operation mode of the mobile communication terminal. For example, the controller 110 can check the current rotation angle of the LCD mounted unit, and generate the display screen vertical display request or a display screen horizontal display request depending on whether the current rotation angle belongs to the preset vertical display screen setting range or horizontal display screen setting range. Alternatively, the controller 110 can generate the display screen vertical display request or display screen horizontal display request depending on user's key press. For another example, the controller 110can generate the display screen vertical display request or display screen horizontal display request, depending on a preset display screen setting direction based on the operation mode that is currently set to the mobile communication terminal. In the Step 243, the controller 110 displays only the image of the region belonging to the preset vertical screen frame 323 among the previously stored background image, on the display screen depending on the previously stored background image setting information.

When the request relating to the display direction is the display screen horizontal display request in the Step 245, the controller 110 proceeds with Step 247, and otherwise, it proceeds with the Step 241. In the Step 247, the controller 110 displays only the image of the region belonging to the preset horizontal screen frame 325 among the previously stored background image, depending on the previously stored background image setting information.

For example, the controller 110 checks the current rotation angle of the LCD mounted unit. If the current rotation angle belongs to the preset vertical display screen setting range, the controller 110 determines whether the display screen vertical display request is generated. When the previously stored background image setting information indicates that the selection region frame 321 is positioned on the image as shown on the fourteenth screen 340 of FIG. 4, the image region corresponding to the vertical screen frame 323 among the background image region selected by the selection region frame 321 is displayed as the background screen as shown on a fifteenth screen 350. If the current rotation angle belongs to the preset horizontal display screen setting range, the controller 110 determines whether the display screen horizontal display request is generated. When the previously stored background image setting information indicates that the selection region frame 321 is positioned on the image as shown on the fourteenth screen 340 of FIG. 4, the image region corresponding to the horizontal screen frame 325 among the background image region selected by the selection region frame 321 is displayed as the background image as shown on a sixteenth screen 360. Thus, the background image can be displayed without its distortion.

As described above, the present invention can provide the background image displaying method for displaying a normal background image irrespective of the display direction of the display screen in the mobile communication terminal, and can provide the background image displaying method for displaying the normal background image even in the horizontal display screen mode set to the mobile communication terminal.

While the invention has been shown and described with reference to a certain preferred embodiment thereof, it will be understood by those skilled in the art that various changes in form and details may be made therein without departing from the scope of the invention as defined by the appended claims. For example, in the exemplary embodiment, it is exemplified that in setting the background image, the vertical screen frame 323 and the horizontal screen frame 325 are enabled when any one side of the selection region frame 321 is overlapped with any one side of the image edge, but they can be enabled based on the user's selection irrespective of the position of the selection region frame 321.

## Claims

1. A method for displaying a background image, the method performed in a mobile communication terminal and comprising steps of:
setting the background image in the mobile communication terminal, the setting comprising:
displaying (205) a predetermined image selected by a user from a plurality of images previously stored in the mobile communication terminal, and displaying a selection region frame (321) including a vertical screen frame (323) and a horizontal screen frame (325) on the predetermined image, and storing, in the mobile communication terminal, an image of a region selected by the selection region frame on the predetermined image as the background image depending on user's selection and storing, in the mobile communication terminal, position information of the vertical screen frame (323) and the horizontal screen frame (325) on the background image;
displaying (243; 350) as a background image an image of a region among the region selected by the selection region frame which is associated with the vertical screen frame on the background image in response to a request for displaying a display screen of the mobile communication terminal in vertical direction; and
displaying (247; 360) as a background image an image of a region among the region selected by the selection region frame which is associated with the horizontal screen frame on the background image in response to a request for displaying the display screen of the mobile communication terminal in horizontal direction.

2. The method of claim 1, wherein the step of setting the background image further comprises:
moving and displaying (209) the selection region frame (321) in response to pressing of a direction key;
checking (211) whether any one side of the selection region frame is overlapped with any one side constituting an edge of the predetermined image;
when the overlapped side is a vertical side, enabling (215) the vertical screen frame,
and moving (219) and displaying an image within the selection region frame depending on direction key pressed by the user;
when the overlapped side is a horizontal side, enabling (227) the horizontal screen frame, and moving (231) and displaying an image within the selection region frame depending on a direction key pressed by the user; and
storing (237) an image of a region selected by the selection region frame on the predetermined image as the background image, in response to user's input for setting completion, storing the position information of the vertical screen frame and the horizontal screen frame on the background image, and setting the background image.

3. The method of claim 1, wherein the step of setting the background image further comprises:
moving and displaying the selection region frame depending on direction key pressed;
in response to a user's request, enabling the vertical screen frame, and moving and
displaying an image within the selection region frame depending on a direction key pressed by user;
in response to a user request, enabling the horizontal screen frame, and moving and
displaying an image within the selection region frame depending on a user's press of direction key; and
storing an image of a region selected by the selection region frame on the predetermined image as the background image, in response to user's input for setting completion, storing the position information of the vertical screen frame and the horizontal screen frame on the background image, and setting the background image.

4. The method of claim 2 or 3, wherein the vertical screen frame indicates the region that is substantially displayed on the display screen as the background image in vertical display screen display mode, on the region of the predetermined image selected by the selection region frame, and is constructed to, in the vertical display screen display mode, have the same vertical side to horizontal side ratio as a vertical side to horizontal side ratio of the display screen and have a possible greatest size within the selection region frame, and the horizontal screen frame indicates the region that is substantially displayed on the display screen as the background image in horizontal display screen display mode, on the region selected by the selection region frame, and is constructed to, in the horizontal display screen display mode, have the same vertical side to horizontal side ratio as the vertical side to horizontal side ratio of the display screen and have a possible greatest size within the selection region frame.

5. The method of claim 4, wherein a vertical display request and a horizontal display request of the display screen of the mobile communication terminal are determined depending on whether, when an LCD mounted unit of constituent units of the mobile communication terminal is rotated with respect to a predetermined axis, its rotation angle belongs to preset vertical display screen setting range or horizontal display screen setting range.

6. The method of claim 5, wherein the vertical display request and horizontal display request of the display screen of the mobile communication terminal are determined depending on user's input.

7. A mobile communication terminal comprising means for carrying out the method according to one of claim 1 to 6.

## Patentansprüche

1. Verfahren zum Anzeigen eines Hintergrundbildes, wobei das Verfahren in einem Mobilkommunikations-Endgerät durchgeführt wird und die folgenden Schritte umfasst:
Einstellen des Hintergrundbildes in dem Mobilkommunikations-Endgerät, wobei das Einstellen umfasst:
Anzeigen (205) eines von einem Benutzer aus einer Vielzahl im Voraus in dem Mobilkommunikations-Endgerät gespeicherter Bilder ausgewählten vorgegebenen Bildes und Anzeigen eines Auswahlbereich-Rahmens (321), der einen vertikalen Bildschirm-Rahmen (323) und einen horizontalen Bildschirm-Rahmen (325) enthält,
auf dem vorgegebenen Bild und Speichern eines Bildes des mit dem Auswahlbereich-Rahmen auf dem vorgegebenen Bild ausgewählten Bereiches als das Hintergrundbild in dem Mobilkommunikations-Endgerät in Abhängigkeit von der Auswahl eines Benutzers und Speichern von Positionsinformationen des vertikalen Bildschirm-Rahmens (323) und des horizontalen Bildschirm-Rahmens (325) auf dem
Hintergrundbild in dem Mobilkommunikations-Endgerät;
Anzeigen (243; 350) eines Bildes eines Bereiches von dem mit dem Auswahlbereich-Rahmen ausgewählten Bereich, der mit dem vertikalen Bildschirm-Rahmen auf dem Hintergrundbild zusammenhängt, als ein Hintergrundbild in Reaktion auf eine Anforderung zum Anzeigen eines Anzeigebildschirms des Mobilkommunikations-Endgerätes in vertikaler Richtung; und
Anzeigen (247; 360) eines Bildes eines Bereiches von dem mit dem Auswahlbereich-Rahmen ausgewählten Bereich, der mit dem horizontalen Bildschirm-Rahmen auf dem Hintergrund-Bild zusammenhängt, als ein Hintergrundbild in Reaktion auf eine Anforderung zum Anzeigen des Anzeigebildschirms des Mobilkommunikations-Endgerätes in horizontaler Richtung.

2. Verfahren nach Anspruch 1, wobei der Schritt des Einstellens des Hintergrundbildes des Weiteren umfasst:
Verschieben und Anzeigen (209) des Auswahlbereich-Rahmens (321) in Reaktion auf Drücken einer Richtungs-Taste;
Prüfen (211), ob sich eine Seite des Auswahlbereich-Rahmens mit einer Seite überlappt,
die eine Kante des vorgegebenen Bildes bildet;
wenn die überlappte Seite eine vertikale Seite ist, Aktivieren (215) des vertikalen Bildschirm-Rahmens und Verschieben (219) sowie Anzeigen eines Bildes innerhalb des Auswahlbereich-Rahmens in Abhängigkeit von einer von dem Benutzer gedrückten Richtungstaste;
wenn die überlappte Seite eine horizontale Seite ist, Aktivieren (227) des horizontalen Bildschirm-Rahmens und Verschieben (231) sowie Anzeigen eines Bildes in dem Auswahlbereich-Rahmen in Abhängigkeit von einer von dem Benutzer gedrückten Richtungstaste; und
Speichern (237) eines Bildes eines mit dem Auswahlbereich-Rahmen auf dem vorgegebenen Bild ausgewählten Bereiches als das Hintergrundbild in Reaktion auf Benutzereingabe zum Abschließen der Einstellung, Speichern der Positions-Informationen des vertikalen Bildschirm-Rahmens und des horizontalen Bildschirm-Rahmens auf dem Hintergrundbild sowie Einstellen des Hintergrundbildes.

3. Verfahren nach Anspruch 1, wobei der Schritt des Einstellens des Hintergrundbildes des Weiteren umfasst:
Verschieben und Anzeigen des Auswahlbereich-Rahmens in Abhängigkeit von einer gedrückten Richtungstaste;
Aktivieren des vertikalen Bildschirm-Rahmens in Reaktion auf eine Benutzeranforderung und Verschieben sowie Anzeigen eines Bildes innerhalb des Auswahlbereich-Rahmens in Abhängigkeit einer von einem Benutzer gedrückten Richtungstaste;
Aktivieren des horizontalen Bildschirmrahmens in Reaktion auf eine Benutzeranforderung und Verschieben sowie Anzeigen eines Bildes innerhalb des Auswahlbereich-Rahmens in Abhängigkeit davon, dass ein Benutzer eine Richtungs-Taste drückt; und
Speichern eines Bildes eines mit dem Auswahlbereich-Rahmen auf dem vorgegebenen Bild ausgewählten Bereiches als das Hintergrundbild in Reaktion auf Benutzereingabe zum Abschließen der Einstellung, Speichern der Positions-Informationen des vertikalen Bildschirm-Rahmens und des horizontalen Bildschirm-Rahmens auf dem Hintergrundbild sowie Einstellen des Hintergrundbildes.

4. Verfahren nach Anspruch 2 oder 3, wobei der vertikale Bildschirm-Rahmen den Bereich, der im Wesentlichen auf dem Anzeigebildschirm als das Hintergrundbild im Modus zum
vertikalen Anzeigen des Anzeigebildschirms angezeigt wird, auf dem mit dem Auswahlbereich-Rahmen ausgewählten vorgegebenen Bild angibt und so aufgebaut ist, dass er in dem Modus zum vertikalen Anzeigen des Anzeigebildschirms das gleiche Verhältnis von vertikaler Seite zu horizontaler Seite wie ein Verhältnis von vertikaler Seite zu horizontaler Seite des Anzeigebildschirms hat und eine größtmögliche Größe innerhalb des Auswahlbereich-Rahmens hat, und der horizontale Bildschirmrahmen den Bereich, der im Wesentlichen auf dem Anzeigebildschirm als das Hintergrundbild im Modus zum horizontalen Anzeigen des Anzeigebildschirms angezeigt wird, auf dem mit dem Auswahlbereich-Rahmen ausgewählten Bereich angibt, und der so aufgebaut ist, dass er in dem Modus zum horizontalen Anzeigen des Anzeigebildschirms das gleiche Verhältnis von vertikaler Seite zu horizontaler Seite wie das Verhältnis von vertikaler Seite zu horizontaler Seite des Anzeigebildschirms hat und eine größtmögliche Größe innerhalb des Auswahlbereich-Rahmens hat.

5. Verfahren nach Anspruch 4, wobei eine Anforderung zum vertikalen Anzeigen und eine Anforderung zum horizontalen Anzeigen des Anzeigebildschirms des Mobilkommunikations-Endgerätes in Abhängigkeit davon festgestellt werden, ob, wenn eine mit LCD versehene Einheit von Einheiten, die das Mobilkommunikations-Endgerät bilden, in Bezug auf eine vorgegebene Achse gedreht wird, ihr Drehwinkel zu einem vorgegebenen vertikalen Anzeigebildschirm-Einstellbereich oder einem horizontalen Anzeigebildschirm-Einstellbereich gehört.

6. Verfahren nach Anspruch 5, wobei die Anforderung zum vertikalen Anzeigen und die Anforderung zum horizontalen Anzeigen des Anzeigebildschirms des Mobilkommunikations-Endgerätes in Abhängigkeit von Benutzereingabe bestimmt werden.

7. Mobilkommunikations-Endgerät, das eine Einrichtung zum Ausführen des Verfahrens nach einem der Ansprüche 1 bis 6 umfasst.

## Revendications

1. Procédé d'affichage d'une image d'arrière plan, le procédé étant exécuté dans un terminal de communication mobile et comprenant les étapes consistant à :
régler l'image d'arrière plan dans le terminal de communication mobile, le réglage comprenant :
l'affichage (205) d'une image prédéterminée sélectionnée par un utilisateur parmi une pluralité d'images précédemment mémorisées dans le terminal de communication mobile, et l'affichage du cadre d'une région sélectionnée (321) incluant un cadre d'écran vertical (323) et un cadre d'écran horizontal (325) sur l'image prédéterminée et la mémorisation, dans le terminal de communication mobile, de l'image d'une région sélectionnée par le cadre de région de sélection sur l'image prédéterminée en tant qu'image d'arrière plan en fonction de la sélection de l'utilisateur et la mémorisation, dans le terminal de communication mobile, d'informations de position du cadre d'écran vertical (323) et du cadre d'écran horizontal (325) sur l'image d'arrière plan ;
afficher (243 ; 350) en tant qu'image d'arrière plan, l'image d'une région parmi la région sélectionnée par le cadre de région de sélection qui est associé avec le cadre d'écran vertical sur l'image d'arrière plan en réponse à une demande d'affichage d'un écran d'affichage du terminal de communication mobile dans la direction verticale ; et
afficher (247 ; 360) en tant qu'image d'arrière plan l'image d'une région parmi la région sélectionnée par le cadre de région de sélection qui est associé avec le cadre d'écran horizontal sur l'image d'arrière plan en réponse à une demande d'affichage de l'écran d'affichage du terminal de communication mobile dans la direction horizontale.

2. Procédé selon la revendication 1, dans lequel l'étape de réglage de l'image d'arrière-plan comprend en outre :
le déplacement et l'affichage (209) du cadre de région de sélection (321) en réponse à l'appui sur une touche de direction ;
le contrôle (211) du fait qu'un côté quelconque du cadre de région de sélection est recouvert par un côté quelconque constituant un bord de l'image prédéterminée ;
lorsque le côté recouvert est un côté vertical, l'activation (215) du cadre d'écran vertical et le déplacement (219) et l'affichage d'une image dans le cadre de région de sélection en fonction de la touche de direction actionnée par l'utilisateur ;
lorsque le côté recouvert est un côté horizontal, l'activation (227) du cadre d'écran horizontal et le déplacement (231) et l'affichage d'une image dans le cadre de région de sélection en fonction de la touche de direction actionnée par l'utilisateur ; et
la mémorisation (237) de l'image d'une région sélectionnée par le cadre de région de sélection sur l'image prédéterminée en tant qu'image d'arrière plan, en réponse à l'entrée par l'utilisateur de la fin du réglage, la mémorisation des informations de position du cadre d'écran vertical et du cadre d'écran horizontal sur l'image d'arrière plan et le réglage de l'image d'arrière plan.

3. Procédé selon la revendication 1, dans lequel l'étape de réglage de l'image d'arrière-plan comprend en outre :
le déplacement et l'affichage du cadre de région de sélection en fonction de la touche de direction actionnée ;
en réponse à une demande de l'utilisateur, l'activation du cadre d'écran vertical et le déplacement et l'affichage d'une image dans le cadre de région de sélection en fonction de la touche de direction actionnée par l'utilisateur ;
en réponse à une demande de l'utilisateur, l'activation du cadre d'écran horizontal et le déplacement et l'affichage d'une image dans le cadre de région de sélection en fonction de la touche de direction actionnée par l'utilisateur ; et
la mémorisation de l'image d'une région sélectionnée par le cadre de région de sélection sur l'image prédéterminée en tant qu'image d'arrière plan, en réponse à l'entrée par l'utilisateur de la fin du réglage, la mémorisation des informations de position du cadre d'écran vertical et du cadre d'écran horizontal sur l'image d'arrière-plan et le réglage de l'image d'arrière plan.

4. Procédé selon la revendication 2 ou 3, dans lequel le cadre d'écran vertical indique la région qui est sensiblement affichée sur l'écran d'affichage en tant qu'image d'arrière plan dans le mode d'affichage d'écran d'affichage vertical, sur la région de l'image prédéterminée sélectionnée par le cadre de région de
sélection, et est construit pour, dans le mode d'affichage d'écran d'affichage vertical, avoir le même rapport du côté vertical sur le côté horizontal que le rapport du côté vertical sur le côté horizontal de l'écran d'affichage et avoir la plus grande taille possible dans le cadre de région de sélection, et le cadre d'écran horizontal indique la région qui est sensiblement affichée sur l'écran d'affichage en tant qu'image d'arrière plan dans le mode d'affichage d'écran d'affichage horizontal, sur la région sélectionnée par le cadre de région de sélection, et est construit pour, dans le mode d'affichage d'écran d'affichage horizontal, avoir le même rapport du côté vertical sur le côté horizontal que le rapport du côté vertical sur le côté horizontal de l'écran d'affichage et avoir la plus grande taille possible dans le cadre de région de sélection.

5. Procédé selon la revendication 4, dans lequel une demande d'affichage vertical et une demande d'affichage horizontal de l'écran d'affichage du terminal de communication mobile sont déterminées en fonction du fait que, lorsqu'une unité à LCD d'unités constitutives du terminal de communication mobile est tournée par rapport à un axe prédéterminé, son angle de rotation appartient à la plage de réglage d'écran d'affichage vertical ou à la plage de réglage d'écran d'affichage horizontal, fixées à l'avance.

6. Procédé selon la revendication 5, dans lequel la demande d'affichage vertical et la demande d'affichage
horizontal de l'écran d'affichage du terminal de communication mobile sont déterminées en fonction d'une entrée de l'utilisateur.

7. Terminal de communication mobile comprenant un moyen pour exécuter le procédé selon l'une des revendications 1 à 6.
